# EUROPEAN PATENT APPLICATION

(11) **EP 2 340 749 A1**
(43) Date of publication of application: **06.07.2011**
(21) Application number: 10185473.5
(22) Date of filing: 05.01.2006
(51) Int. Cl.: A47J 31/40, B67D 1/14

(54) **Apparatus and methods for producing a beverage**

(30) Priority: 06.06.2005 US 145720; 28.01.2005 US 648106 P
(62) Divisional of application: 06717442.5
(71) Applicant: Shultis, Emil, Leeds, New York 12451 (US)
(72) Inventor: Shultis, Emil, Leeds, New York 12451 (US)
(74) Representative: Lippert, Stachow & Partner

(57) **Abstract**

An apparatus for producing a beverage includes a water tank (25), a concentrate container (39), and a mixing chamber (79, 479). A water conduit (69, 469) supplies water by gravity from the water tank to a water discharge mixing opening (68,468) and a concentrate conduit (51, 451) supplies the liquid concentrate by gravity from the concentrate container to a concentrate discharge mixing opening (66, 466). The discharge openings open directly and separately into the mixing chamber. A dispenser assembly (103) opens and closes the discharge openings and the released water and liquid concentrate directly leaves the mixing chamber to produce the beverage. In another embodiment, an apparatus includes a sealable chamber (214, 414), and an air pump (210, 410) for pressurizing the sealable chamber and the concentrate container (39). A dispenser and methods for producing a beverage from a liquid concentrate and water are also disclosed.

## Description

### CROSS-REFERENCE TO RELATED APPLICATION

This application is a continuation-in-part of U.S. patent application Serial No. 11/145,720, filed June 6, 2005, entitled "An Apparatus For Producing A Beverage," which claims the benefit of U.S. Provisional Application No. 60/648,106, filed January 28, 2005, entitled "Device For Making Coffee From Liquid Concentrate," the entire subject matter of these applications being incorporated herein by reference.

### FIELD OF THE INVENTION

The present invention relates to apparatus and methods for producing beverages and, more specifically, to apparatus and methods for producing beverages from liquid concentrate.

### BACKGROUND OF THE INVENTION

Many beverages have been produced from concentrate including fruit juices and coffee and tea. However, the production of coffee and tea from concentrate has been limited substantially to commercial devices that are expensive and cumbersome for home or office usage.

An example of a beverage apparatus that produces beverages from two liquid components is shown in the U.S. Patent No. 3,843,020 issued to Bardeau. The beverage apparatus in Bardeau includes a spring for raising a carton containing the concentrate to control the flow rate of the concentrate. U.S. Patent No. 3,532,505 to Cornelius discloses a coffee dispensing machine which utilizes a carbonated coffee concentrate. Another example, U.S. Patent No. 6,752,069 issued to Burke et al. discloses adding water, either manually or automatically, to a beverage concentrate.

U.S. Patent No. 4,579,048 issued to Stover discloses initially brewing a concentrate, specifically from tea leaves, to produce a concentrate. The concentrate is then diluted to an acceptable strength and temperature by the timed addition of water. U.S. Patent No. 6,149,035 issued to Gorski et al. discloses using a dry concentrate for dispensing a food or beverage.

U.S. Patent No. 3,536,496 issued to Paoloni discloses a method for producing concentrate and then using such concentrate for producing coffee. U.S. Patent No. 5,740,719 issued to Triola et al. discloses a coffee maker using liquid coffee concentrate and a plunger to deliver the concentrate.

Vitality Foodservice, Inc. of Tampa, Florida offers dispensers for coffee and hot beverages. The device includes a solenoid valve for controlling discharge of water from a water tank to an open channel. Disposed above the open channel is a control valve for controlling discharge of concentrate into the water in the channel. The resulting beverage is then discharged.

There is a need for further apparatus and methods for producing a beverage from liquid concentrate.

### SUMMARY OF THE INVENTION

The present invention provides in a first aspect, an apparatus for producing a beverage from a liquid concentrate and water. The apparatus includes a water tank, a concentrate container, a mixing chamber, a water conduit for supplying the water from the water tank to the mixing chamber by gravity, a concentrate conduit for supplying the liquid concentrate from the concentrate container to the mixing chamber by gravity, and a dispenser assembly. The water conduit has a water discharge mixing opening which opens directly into the mixing chamber, and the concentrate conduit has a concentrate discharge mixing opening which opens directly into the mixing chamber and separately from the water discharge mixing opening. The dispenser assembly is operable to open and close the concentrate discharge mixing opening and the water discharge mixing opening to permit and inhibit the flow of liquid concentrate and water directly and separately into the mixing chamber, which released water and liquid concentrate directly leaves the mixing chamber to produce the beverage.

The present invention provides in a second aspect, an apparatus for producing a beverage from a liquid concentrate and water. The apparatus includes an enclosure having a sealable chamber, a concentrate container disposed in the sealable chamber, a mixing chamber, a water conduit for supplying the water to the mixing chamber, a concentrate conduit for supplying the liquid concentrate from the concentrate container to the mixing chamber, an air pump for pressurizing the sealable chamber and concentrate container, and dispenser assembly. The water conduit has a water discharge mixing opening which opens directly into the mixing chamber, and the concentrate conduit has a concentrate discharge mixing opening which opens directly into the mixing chamber and separately from the water discharge mixing opening. The dispenser assembly is operable to open and close the concentrate discharge mixing opening and the water discharge mixing opening to permit and inhibit the flow of liquid concentrate and water directly and separately into the mixing chamber, which released water and liquid concentrate directly leaves the mixing chamber to produce the beverage.

The present invention provides in a third aspect, a dispenser for discharging a beverage from liquid concentrate and water. The dispenser includes a conduit housing having a water conduit having a water discharge mixing opening and a concentrate conduit having a concentrate discharge mixing opening, a strength valve for adjusting the flow of the liquid concentrate in the concentrate conduit, a mixing chamber into which the water discharge mixing opening and the concentrate discharge mixing opening directly and separately opens, a stopper for opening and closing the concentrate discharge mixing opening and the water discharge mixing opening to permit and inhibit the flow of the liquid concentrate and the water into the mixing chamber, a spring for biasing the stopper to inhibit the flow of the liquid concentrate and the water into the mixing chamber, and a handle for moving the stopper to permit the flow of the liquid concentrate and the water into the mixing chamber, which released water and liquid concentrate directly leaves the mixing chamber to produce the beverage.

The present invention provides in a fourth aspect, a method for producing a beverage from a liquid concentrate and water. The method includes transferring a supply of the water through a water conduit to a water discharge mixing opening which opens directly into a mixing chamber by gravity, transferring a supply of the liquid concentrate through a concentrate conduit to a concentrate discharge mixing opening which opens directly into the mixing chamber and separately from the water discharge mixing opening by gravity, and selectively opening and closing the concentrate discharge mixing opening and the water discharge mixing opening to permit and inhibit the flow of liquid concentrate and water directly and separately into the mixing chamber, which released water and liquid concentrate directly leaves the mixing chamber to produce the beverage.

The present invention provides in a fifth aspect, a method for producing a beverage from a liquid concentrate. The method includes attaching a flexible bag containing a supply of the liquid concentrate to a concentrate conduit, sealing the flexible bag in an airtight enclosure, pressurizing air in the airtight enclosure and around the flexible bag, transferring the supply of the liquid concentrate through a concentrate conduit to a concentrate discharge mixing opening which opens directly into the mixing chamber and separately from the water discharge mixing opening, transferring a supply of the water through a water conduit to a water discharge mixing opening which opens directly into a mixing chamber, and selectively opening and closing the concentrate discharge mixing opening and the water discharge mixing opening to permit and inhibit the flow of liquid concentrate and water directly and separately into the mixing, which released water and liquid concentrate directly leaves the mixing chamber to produce the beverage.

### BRIEF DESCRIPTION OF THE DRAWINGS

The subject matter which is regarded as the invention is particularly pointed out and distinctly claimed in the concluding portion of the specification. The invention, however, may best be understood by reference to the following detailed description of various embodiments and accompanying drawings in which:

FIG. 1 is a pictorial view of the apparatus in accordance with the present invention for producing a beverage with the enclosure partially broken away showing a water tank, a concentrate container, a strength valve, and a dispenser;

FIG. 2 is a pictorial view of the concentrate container, a connection to the water tank, a connection to the liquid concentrate, the conduit housing, as well as the strength valve and the dispenser of FIG. 1;

FIG. 3 is a side elevational view of the water conduit and the concentrate conduit of FIG. 1 showing the flow paths in broken lines;

FIG. 4 is a view taken along line 4-4 showing the concentrate conduit as one channel and the water conduit as two channels;

FIG. 5 is an exploded side elevational view of the conduit housing, the mixing chamber, and the dispenser assembly of FIG. 1;

FIG. 6 is a schematic diagram of the electrical circuit that controls the operation of the apparatus of FIG. 1 for producing a beverage from liquid concentrate;

FIG. 7 is a pictorial view of another apparatus in accordance with the present invention for producing a beverage with the enclosure partially broken away showing a water tank, a concentrate container disposed in a sealed chamber, a strength valve, an air pump, and a dispenser;

FIG. 8 is pictorial view of another apparatus in accordance with the present invention for producing a beverage with the enclosure partially broken away showing a water tank, a concentrate container disposed in a sealed chamber, a strength valve, an air pump, and a dispenser;

FIG. 9 is a schematic diagram of the electrical circuit that controls the operation of the apparatus of FIG. 8 for producing a beverage from liquid concentrate;

FIG. 10 is pictorial view of another apparatus in accordance with the present invention for producing a beverage;

FIG. 11 is a side elevational view of the water conduit and the concentrate conduit of FIG. 10 showing the flow paths in broken lines; and

FIG. 12 is a view taken along line 12-12 showing the concentrate conduit as one channel and the water conduit as two channels.

### DETAILED DESCRIPTION OF THE INVENTION

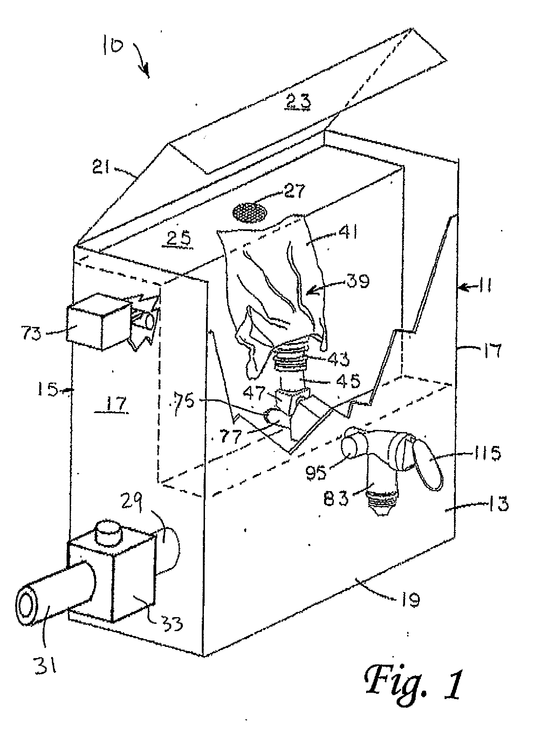

Referring to FIG. 1, an apparatus 10 is shown for producing a beverage from a liquid concentrate and water. In this embodiment, as described below, the beverage produced by apparatus 10 may be coffee. The apparatus includes an enclosure 11 which is shown partially broken away. The enclosure 11 has a front 13 and a back 15 and two sides 17 as well as a base 19. A lid 21 is hinged to the back 15 to rotate away from the front 13 and the sides 17. The lid 21 includes a lip 23 which extends at right angles from the lid 21 to fit securely against the front 13. Within the enclosure 11 against the back 15 is a water tank 25. At the top of the water tank 25 is a vent 27. A filler inlet 29 extends through one of the sides 17 of the enclosure 11 to supply water to the water tank 25.

Mounted in front of the water tank 25 is a concentrate container 39. The concentrate container 39, as shown, preferably includes a flexible bag 41 that collapses as concentrate is consumed. The flexible bag 41 is inexpensive and once emptied is readily disposable. In addition to the flexible bag 41, the concentrate container 39 includes an outlet 43 which is sealed until pierced by a probe 45 which self seals in the outlet 43. The concentrate container 39 is mounted on the probe 45.

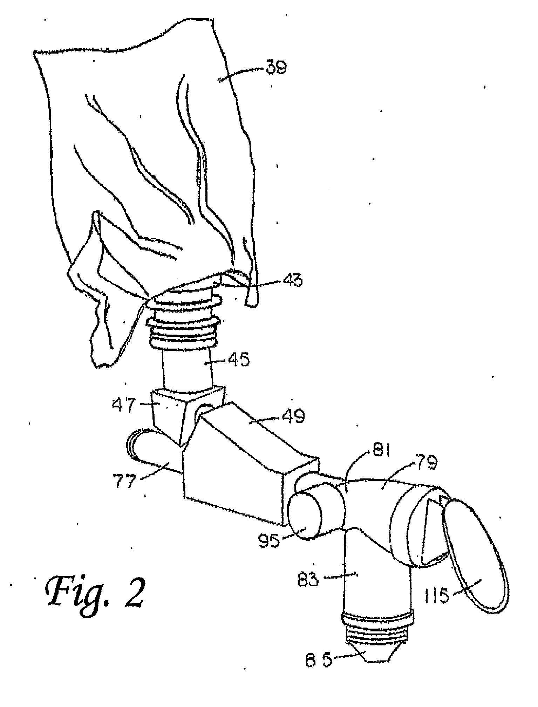

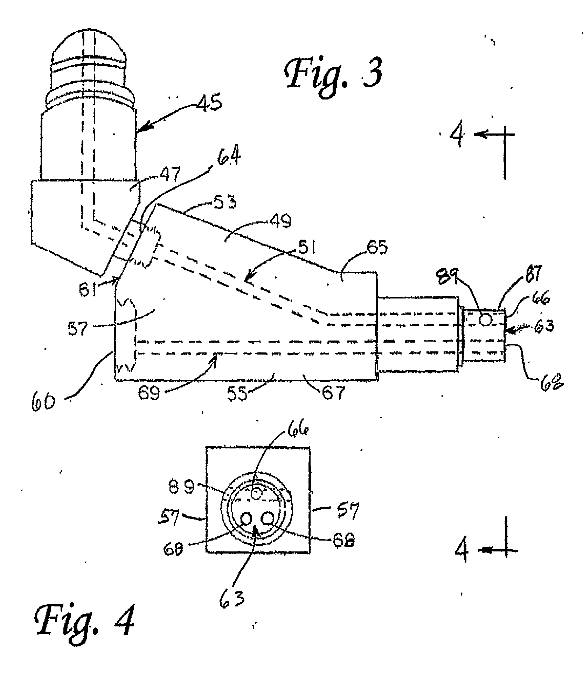

As seen in FIGS. 2 and 3, the probe 45 connects to a conduit housing 49. The probe 45 is generally vertically oriented but at its lower end 47 is offset at an obtuse angle to the vertical to join the conduit housing 49. The probe 45 is threaded at its lower end 47 which is the end opposite from the concentrate container 39 (FIG. 2). This thread engages a thread in the conduit housing 49.

As seen in broken lines in FIG. 3, a concentrate conduit 51 extends through the conduit housing 49. The concentrate conduit 51 is located at an acute angle to the horizontal within the conduit housing 49. The conduit housing 49 has a top 53 which is inclined at an acute angle to the horizontal, a bottom 55 which is generally horizontal as well as two sides 57 (FIG. 4) which are generally vertical and preferably parallel to one another.

The conduit housing 49 also has two ends, namely an inlet end 61 adjacent to the water tank 25 (FIG. 1) and the concentrate container 39 (FIG. 1) and an outlet end 63. In conduit housing 49, concentrate flows from a concentrate inlet opening 64 in the inlet end 61 to a concentrate discharge mixing opening 66 in the outlet end 63 through the concentrate conduit 51. The concentrate conduit 51 is inclined to the horizontal at an acute angle but the concentrate conduit 51 turns to the horizontal at the outlet end 63 of the conduit housing 49. The conduit housing 49 has an upper portion 65 adjacent the top 53 of the conduit housing 49 and a lower portion 67 adjacent the bottom 55 of the conduit housing 49. The inlet end 61 of the upper portion 65 of the conduit housing 49 is sloped at an acute angle to the horizontal to accommodate the obtuse angle to the vertical at the lower end 47 of the probe 45. The lower portion 67 of the inlet end 61 is generally at right angles to the bottom 55 of the conduit housing 49.

In the lower portion 67 of the conduit housing 49 is one or more water conduits 69. The water conduit, as shown in FIG. 4, may include two channels. One, two or three and possibly more channels may be used to form the water conduit. The number of channels may depend upon the beverage being produced, the concentration level of the concentrate, and the desired level of dilution by water. The water conduit, regardless of the number of channels, may be substantially horizontal. With reference again to FIG. 3, in conduit housing 49, water flows from a water inlet opening 60 in the inlet end 61 to a water discharge mixing opening 68 in the outlet end 63 through water conduits 69. Desirably, the concentrate discharge mixing opening 66 and the water discharge mixing opening 68 are disposed on the same surface to controllable discharge both concentrate and water at the same time as described in greater detail below.

With referenced again to FIG. 1, a supply line 31 (such as from a water supply in a home or building) provides water to the water tank 25 when an automatic feed is utilized. A fill valve 33 is located in the supply line 31. A float valve 73 is located in one side 17 of the water tank 25 above the filler inlet 29 and above the level of a water outlet 75 from the water tank 25. It will be appreciated that the float switch and fill valve may be disposed inside enclosure 11.

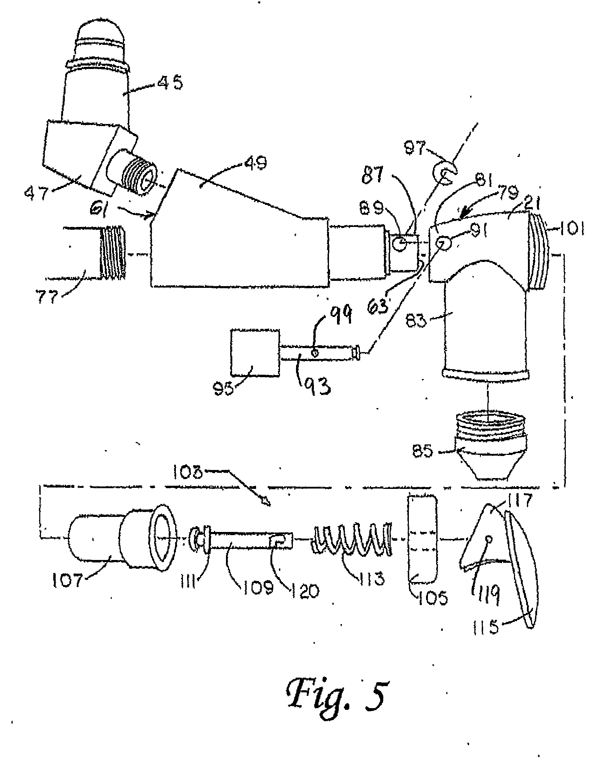

With reference now to FIG. 5, by means of a nipple 77, threaded at both ends, the water conduit 69 (FIG. 3) is connected to the water tank 25 (FIG. 1) at the inlet end 61 of the conduit housing 49. The conduit housing 49 is connected to a mixing chamber 79 at the outlet end 63. The mixing chamber 79 includes two sections, namely an upper section which is also a dispenser housing 81 and a lower section which is also a spout 83. A nozzle 85 is connected to the lower end of the spout 83 remote from the dispenser housing 81.

The conduit housing 49 at the outlet end 63 has a cylindrical extension 87. A conduit opening 89 extends through the cylindrical extension 87 generally at right angles to the concentrate conduit 51 (FIG. 3). A mixing opening 91 extends through the upper section of the mixing chamber 79. The upper section of the mixing chamber 79, also being cylindrical, slides over the cylindrical extension 87 with the upper section of the mixing chamber 79 mounted on the cylindrical extension 87 so that the mixing opening 91 and the conduit opening 89 become aligned with one another. A strength valve 93 is placed into the aligned conduit opening 89 and mixing opening 91. The strength valve 93 which is a cylindrical rod with a knob 95 at one end, secures the mixing chamber 79 to the cylindrical extension 87. A retaining ring 97 snaps onto the end of the strength valve 93 to retain the strength valve 93 in place.

A passageway 99 through the strength valve 93, which is located generally at right angles to the strength valve 93, aligns with the concentrate conduit 51 (FIG. 3). By turning the knob 95, the passageway 99 is misaligned to a degree consistent with the degree that the knob 95 is turned in relationship to the concentrate conduit 51 (FIG. 3). In this way, the rate of flow of the concentrate can be modified consistent with the strength of the beverage desired.

The upper section of the mixing chamber 79 which is also the dispenser housing 81 and the spout 83 are both hollow cylinders and are located generally at right angles to one another. As previously stated, the upper section or dispenser housing 81 is open at both ends and one end is placed over the cylindrical extension 87. On the other end, an external thread 101 is located on which a dispenser assembly 103 is mounted by means of a cap 105. The dispenser assembly 103 includes a stopper 107 which is placed against the outlet end 63 of the conduit housing 49 blocking both the water conduit 69 (FIG. 3) and the concentrate conduit 51 (FIG. 3). An actuator rod 109 engages the stopper 107. The actuator rod 109 has a ring 111 about it which is located toward the stopper 107. A coil spring 113 is mounted about the actuator rod 109 and is compressed between the ring 111 and the cap 105 whereby the coil spring 113 forces the stopper 107 against the outlet end 63 of the conduit housing 49 to block both the water conduit 69 (FIG. 3) and the concentrate conduit 51 (FIG. 3). The dispenser assembly includes a handle 115 and on the back of the handle 115 there are a pair of rocker members 117. The actuator rod 109 extends through the cap 105 and is connected to the handle 115 between the pair of rocker members 117. A pin 119 in the rocker members 117 secures the actuator rod 109 to the rocker members. The pin 119 in the rocker members 117 slides into a groove and opening 120 to secure the actuator rod 109 to the rocker member 117.

By pressing on the bottom of the handle 115, the actuator rod 109 is pulled back which also pulls back the stopper 107 thereby releasing both the liquid concentrate and the water from the concentrate conduit 51 (FIG. 3) and the water conduit 69 (FIG. 3), respectively. Desirably, when the stopper is moved away from outlet end 63 of the conduit housing 49 there is a simultaneous discharge of liquid concentrate and water from both the concentrate discharge mixing opening 66 (FIG. 3) and the water discharge mixing opening 68 (FIG. 3), respectively. When the stopper 107 is disposed against the outlet end 63 of the conduit housing 49, there is a simultaneous shutting off of the discharge of the liquid concentrate and water from both the concentrate discharge mixing opening 66 (FIG. 3) and the water discharge mixing opening 68 (FIG. 3), respectively. It should be specifically noted that the stopper 107 prevents flow directly adjacent the strength valve 93 and the mixing chamber 79. The mixture of water and concentrate then directly leaves the mixing chamber 79 for consumption. Such a configuration of simultaneous controlling both the starting and stopping of the discharge of both the concentrate and water, and also of locating the stopper 107 before the mixing chamber 79, inhibits the likelihood of a previous mixture being included in a subsequent withdrawal of the beverage.

The mixing chamber 79 causes the liquid concentrate and water to mix by swirling within the mixing chamber 79. In addition, by positioning the concentrate discharge mixing opening 66 (FIGS. 3 and 4) and the water discharge mixing opening 68 (FIGS. 3 and 4) adjacent each other, there is a natural tendency for the two discharge streams to spiral around each other and aid in the mixing of the resulting beverage. The mixing chamber 79 also aids in the blending and mixing. The spout 83, which is part of the mixing chamber 79 continues the mixing and blending. The final mixed beverage product is delivered from the bottom of the nozzle 85 attached to the bottom of the spout 83.

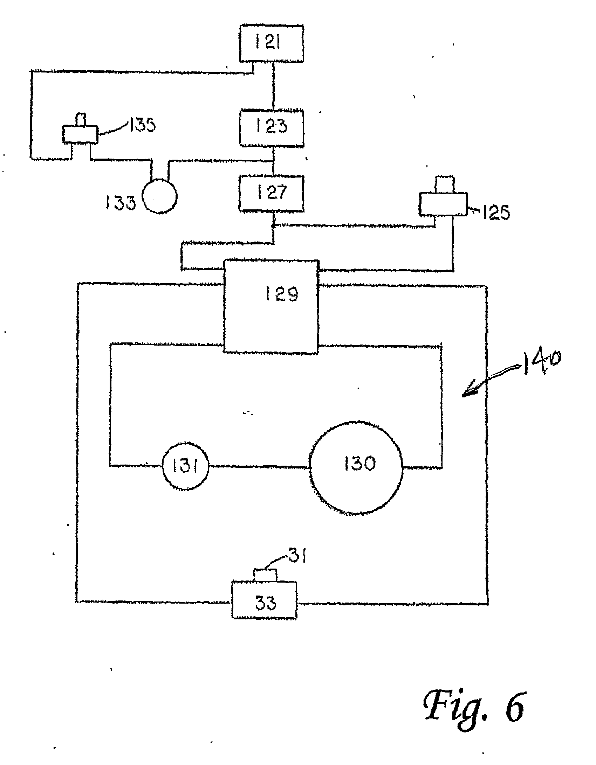

With reference to FIG. 6, a power source 121 of one-hundred-ten volt alternating current may be employed. Power is supplied from the power source 121 through a switch 123, which is preferably a rocker switch. With the switch 123 turned on, a red light 125 is turned on. The red light 125 is the low water fill light. Power also flows to a float switch 127 which is normally closed and which activates a relay 129 which opens the fill valve 33 which introduces water from the supply line 31 to increase the water level in the water tank. Once the desired water level is achieved, the float switch 127 is raised to a desired level which in turn opens the float switch 127 and closes the fill valve 33. Once the fill valve 33 is turned off an electrical circuit 140 having a thermal adjusting unit 130 is activated to bring the temperature of the water to a desired level. When the desired temperature of the water is achieved, the normally closed thermo button 131 is opened which de-energizes the thermal adjusting unit 130 and also closes a normally open thermal button 133 which turns on a green light 135. The lighting of the green light 135 indicates that the apparatus is ready for use. The thermal adjusting unit 130 is shown as a heating element but a cooling element is also within the scope of a thermal adjusting unit 130.

In operation, with reference to FIGS. 1 and 6, electrical power is supplied through the switch 123. The water tank 25 fills from the supply line 31 through the fill valve 33. The concentrate flows by gravity from the concentrate container 39. The water in the water tank 25 flows from the water tank 25 by gravity. The thermal control button 131 holds the water temperature at approximately one-hundred-ninety degrees Fahrenheit. Once the water level drops, the float switch 127 opens the fill valve 33 to supply additional water. By pressing the handle 115, a receptacle (not shown) may be filled through the nozzle 85 with a beverage comprising a blended mixture of liquid concentrate and water in whatever quantity is desired.

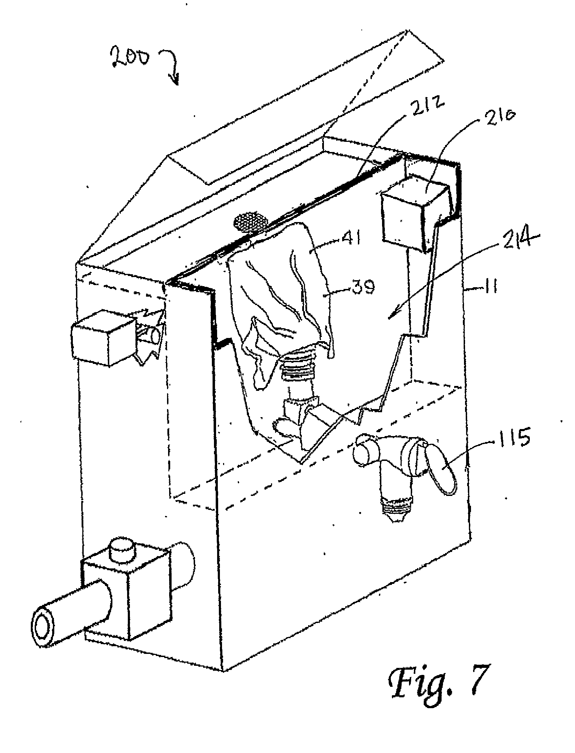

FIG. 7 illustrates another embodiment of an apparatus 200 in accordance with the present invention for producing a beverage from a liquid concentrate and water. Apparatus 200 is essentially the same as apparatus 10 described above with the exception of an airtight enclosure around the concentrate container 39 and an air pump 210. A gasket 212 is provided which when the lid 21 is closed creates a sealed chamber 214 in the enclosure 11 around concentrate container 39. The air pump 210 provides a low positive pressure, of about 2 pounds per square inch (psi) to about 10 pounds per square inch (psi), in the sealed chamber 214 which applies a constant positive pressure around the concentrate container such as flexible bag 41. When a beverage is desired, and the handle 115 is activated, liquid concentrate flows at a constant rate. An added benefit due to the positive pressure is that the flexible bag 41 will completely empty, e.g., there will be little if any concentrate left in the flexible bag.

The air pump may be operably connected to the electrical power supply to pressurize the air surrounding the flexible bag 41 when the water is at the desired temperature. Alternatively, the apparatus may be configured so that upon initially activating the handle 115, the air pump is activated to pressurize the air surrounding the flexible bag.

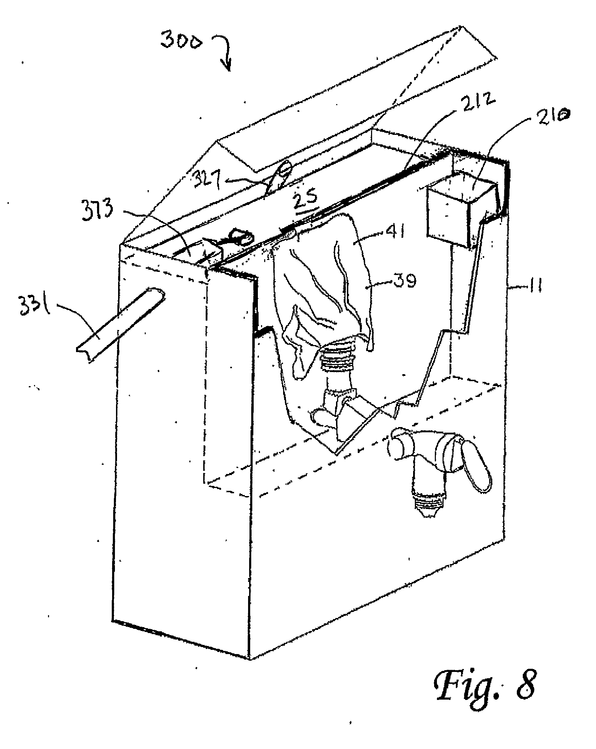

FIG. 8 illustrates another embodiment of an apparatus 300 in accordance with the present invention for producing a beverage from a liquid concentrate and water. Apparatus 300 is essentially the same as apparatus 200 described above with the following exceptions. A float valve 373 is mounted in an open top water tank 25 and connected to a water line 331. Float valve 373 provides an on-off action for controlling the filling of water in the water tank by action of the fall or rise of a float concurrent with the fall and rise of the water in the water tank. The water line may be connected to the back of the enclosure so as to not be visible to users. A vent tube 327 may have an end disposed adjacent the top of the water tank and the other end of the vent tube may be disposed in a drip pan (not shown) mounted on the lower front of the apparatus under the dispenser.

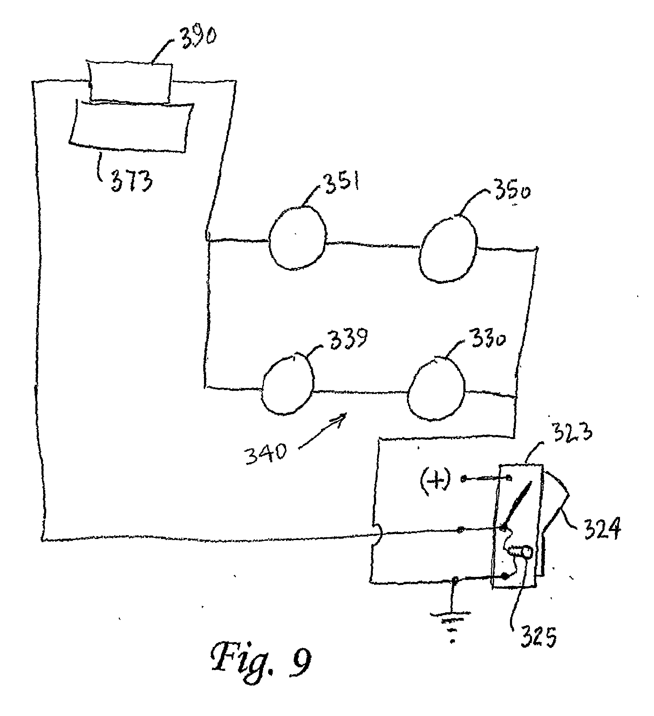

As shown in FIG. 9, a schematic electrical diagram of the electrical circuit in apparatus 300 may include an illuminated on/off rocker switch 323 operably attached to a source of electrical power, e.g., a one-hundred-ten volt alternating current outlet in a home or building.

With the switch 323 turned on, a light 325 is turned on and illuminates a red actuator 324 to alert the user that power is being supplied to the apparatus. In the "on" position and if sufficient water is in the water tank, switch 390 controlled by the float valve 373 allows electrical power to be supplied to an electric circuit 340 comprising a thermo button or temperature sensor 339 and a heater 330 such as a coil heater. The temperature sensor 339 may be attached directly to the water tank (FIG. 8) to measure the temperature of the water. The heating coil or element may be attached to the bottom of the water tank. If the water is cold, the temperature sensor 339 allows electrical current to be supplied to the heater 330. When temperature sensor 339 detects the water getting too hot, it cuts off the current to the heater. When the water cools down, the temperature sensor turns the heater back on. By cycling on and off, the temperature sensor keeps the coil at an even temperature to heat the water in the tank. For safety in the event that the temperature sensor 339 fails, one or more thermal fuses may be employed to cut power if the thermal fuses sense the heat in reaching too high a temperature.

When the desired temperature of the water is achieved as detected by a second thermal button or temperature sensor 351, a light 350 such as a green light is illuminated to alert a user that the water is at the desired temperature for making the beverage. If the water temperature drops, the light 350 would go out and remain out until the water returns to the desired temperature. As described earlier, the apparatus may include a heating element, however, a cooling element for producing cold beverages may be suitably employed.

It is appreciated that the apparatus may be manually filled with water avoiding the need for providing a conduit attached to the apparatus, and attached to the water supply in, for example, a home or business. In addition, an apparatus may include two dispensers, for example, one configured for providing regular coffee or tea, and the other for providing decaffeinated coffee or tea. Further, by closing the strength valve no liquid concentrate will be delivered from the dispenser so as to provide only hot water where a heating element is employed or cold water where a cooling element is employed.

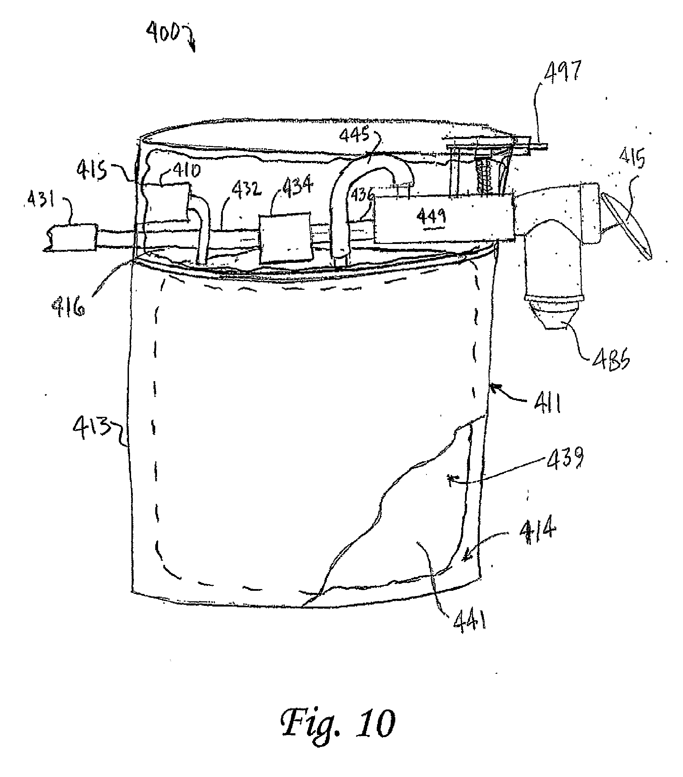

Referring now to FIG. 10, an apparatus 400 in accordance with the present invention is shown for producing a beverage from a liquid concentrate and water. In this embodiment, as described below, the beverage produced by apparatus 400 may be tea. The apparatus includes an enclosure 411. The enclosure 411 may be cylindrical, square, rectangular or any shape. The enclosure 411 includes a bottom portion 413 having a sealed chamber 414 in which is disposed a concentrate container such as a flexible bag 441 that collapses as concentrate is consumed, and a top portion 415. A lid 416 may be attached to the upper end of the bottom portion to seal the flexible bag inside the lower portion. The top portion and the bottom portion may be releasably attachable together.

A supply line 431 (such as from a water supply in a home or building) provides water to apparatus 400. The supply line 431 connects to a tube 432 which in turn connects to a water pressure regulator 434 which reduces the pressure from the supply line (typically about 60 psi) to about 5 psi. The reduced pressure water supply is transferred via a tube 436 to a conduit housing 449 as described in greater detail below.

A tube 445 connects at one end to the flexible bag 441 and at the other end to conduit housing 449 for transferring liquid concentrate from flexible bag 441 to conduit housing 449. An air pump 410 provides a low positive air pressure, of about 2 pounds per square inch (psi) to about 10 pounds per square inch (psi), to the bottom portion of the enclosure 411 to provide a constant positive pressure around the flexible bag 441.

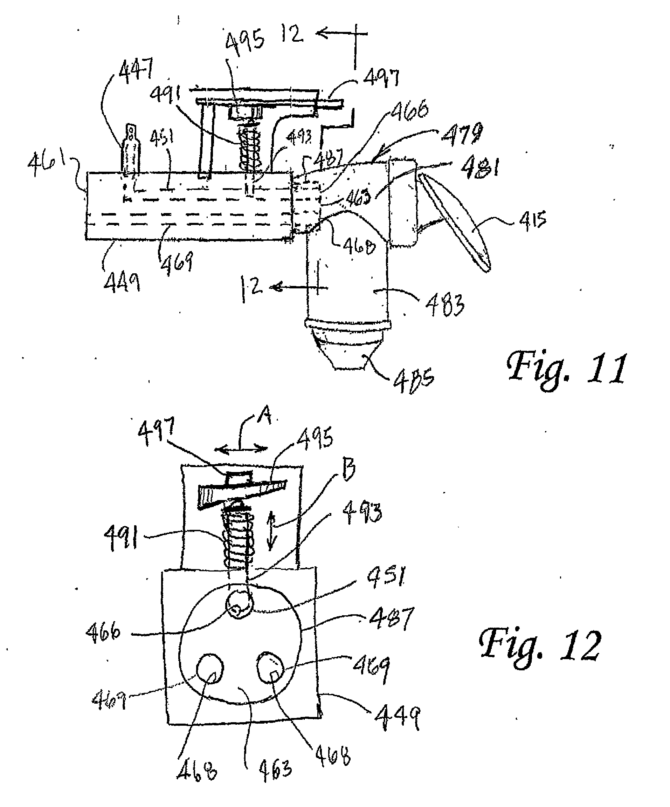

As best shown in FIGS. 11 and 12, the conduit housing 449 has two ends, namely an inlet end 461 (FIG. 11) and an outlet end 463. The conduit housing 449 also includes a concentrate conduit 451 and one or more water conduits 469 that extend through the conduit housing 449.

One end of the concentrate conduit 451 is connected to a hollow projection 447 (FIG. 11) having a concentrate inlet opening which attaches to tube 445 (FIG. 10) for receiving concentrate. The other end of the concentrate conduit 451 is a concentrate discharge mixing opening 466 which opens onto outlet end 463. In a lower portion of the conduit housing 449 is a water conduit 469 which may comprise one or more channels. One end of the water conduit 469 is a water inlet opening which attaches to the tube 436 (FIG. 10) for receiving water. The other end of the water conduit 469 is a water discharge mixing opening 468 which opens onto outlet end 463. Both the concentrate conduit and the water conduit may be horizontally disposed. Desirably, the concentrate discharge mixing opening 466 and the water discharge mixing opening 468 are disposed on the same surface to controllable discharge both concentrate and water at the same time.

The conduit housing 449 is connected to a mixing chamber 479 (FIG. 11) at the outlet end 463. The mixing chamber 479 includes two sections, namely an upper section which is also a dispenser housing 481 (FIG. 11) and a lower section which is also a spout 483 (FIG. 11). A nozzle 485 (FIG. 11) is connected to the lower end of the spout 483 (FIG. 11) remote from the dispenser housing 481 (FIG. 11). The conduit housing 449 at the outlet end 463 has a cylindrical extension 487.

The rate of concentrate to be delivered to the mixing chamber is controlled by a strength valve 493 which selectively extends into concentrate conduit 451. The strength valve 493 may be a cylindrical rod or flat bar having a lower end which is disposed in concentrate conduit 451 and an upper end which is disposed adjacent a movable ramp 495. A coil spring 491 biases the upper end of strength valve against ramp 495. By moving a strength lever 497 attached to ramp 495 in the direction of double-headed arrow A (FIG. 12) back and forth, the strength valve 493 is moved in the direction of double-headed arrow B (FIG. 12) up and down. In this way, the rate of flow of the concentrate can be modified consistent with the strength of the beverage desired.

The upper section of the mixing chamber 479 (FIG. 11), the spout 483 (FIG. 11), and the dispenser assembly including a handle 415 (FIG. 11) is similar to the mixing chamber, the spout, and the dispenser assembly illustrated in FIG. 5 and described above.

In operation, with reference to FIG. 10, pump 410 may be continuously operated to pressurize chamber 414, and thus pressurize the flexible bag 441. Alternatively, the pump may be activated by a switch connected to handle 415 upon the user initially moving the handle 415. The strength lever 497 is moved to a position corresponding to the desired strength of the beverage. The beverage is produced by the user placing a cup or glass under spout 485 and pressing or lifting the handle 415. Upon the user doing so, the stopper is moved away from the concentrate discharge mixing opening and the water discharge mixing opening thereby allowing concentrate and water to enter the mixing chamber and then exit the spout.

The advantages of the various apparatus described above are many. In one embodiment, by use of gravity feed for both the water and the concentrate, the need for manual and/or powered fluid pumps are eliminated. In another embodiment, the use of an air pump allows providing a constant liquid concentrate flow. The cost of the various apparatus is brought down to a reasonable level for home and office usage and the compact size of the apparatus is also suitable for home and office use. The mixing chamber provides excellent blending and mixing resulting in a very desirable drink. The various apparatus also allows a user to readily select the strength of the beverage. When used with liquid coffee or tea concentrate, an exceptional coffee or tea drink is produced. When brewing coffee or tea from liquid concentrate there are no filters or used coffee grounds or tea leaves to clean up. A user can brew a fresh cup of coffee or tea one cup at a time on demand.

While various embodiments of the present invention have been illustrated and described, it will be appreciated by those skilled in the art that many further changes and modifications may be made thereunto without departing from the spirit and scope of the invention.

## Claims

1. An apparatus for producing a beverage from a liquid concentrate and water, the apparatus comprising:
an enclosure (11, 411) having a sealable chamber (214, 414);
a concentrate container (39) disposed in the sealable chamber (214, 414);
a mixing chamber (79, 479);
a water conduit (69, 469) for supplying the water to the mixing chamber (79, 479), the water conduit (69, 469) having a water discharge mixing opening (68, 468) which opens directly into the mixing chamber (79, 479);
a concentrate conduit (51, 451) for supplying the liquid concentrate from the concentrate container (39, 439) to the mixing chamber (79, 479), the concentrate conduit (51, 451) having a concentrate discharge mixing opening (66, 466) which opens directly into the mixing chamber (79, 479) and separately from the water discharge mixing opening (68, 468);
an air pump (210, 410) for pressurizing the sealable chamber (214, 414) and concentrate container (39, 439); and
a dispenser assembly (103) for opening and closing the concentrate discharge mixing opening (66, 466) and the water discharge mixing opening (68, 468) to permit and inhibit the flow of liquid concentrate and water directly and separately into the mixing chamber (79, 479), which released water and liquid concentrate directly leaves the mixing chamber (79, 479) to produce the beverage.

2. The apparatus of claim 14 further comprising a conduit housing (49, 449) and wherein the water conduit (69, 469) and the concentrate conduit (51, 451) are disposed in the conduit housing (49, 449).

3. The apparatus of claim 14 wherein the air pump is disposed in the sealable chamber.

4. The apparatus of claim 1 wherein the dispenser assembly (103) comprises a stopper (107) for simultaneously opening and closing the concentrate discharge mixing opening (66, 466) and the water discharge mixing opening (68, 468) to permit and inhibit the flow of liquid concentrate and water into the mixing chamber (79, 479).

5. The apparatus of claim 1 further comprising a water tank (25) and a heater for heating the water in the water tank (25).

6. The apparatus of claim 1 further comprising a water tank (25) connected to the water conduit (69, 469), and wherein the water tank (25) comprises a vent (27).

7. The apparatus of claim 1 further comprising:
a pressure reducer (434) for reducing a pressure of the water to the water conduit (69, 469);
a strength valve (93, 493) for adjusting the flow of liquid concentrate in the concentrate conduit (51, 451); and
wherein:
the concentrate container (39, 439) comprises a flexible concentrate bag (41, 441); and
the dispenser assembly (103) comprises a manually-operated dispenser assembly comprising a stopper (107) having a normally biased position to inhibit the flow of liquid concentrate and water from the concentrate discharge mixing opening (66, 466) and the water discharge mixing opening (68, 468), and a user-activated position to simultaneously open the concentrate discharge mixing opening (66, 466) and the water discharge mixing opening (68, 468) to permit the discharge of concentrate and water into the mixing chamber (79, 479) to produce the beverage.

8. The apparatus of claim 1 further comprising:
a water tank (25) for supplying water to the water conduit by gravity;
a float valve (73, 373) for controlling the supply of water to the water tank (25);
a strength valve (93, 493) for adjusting the flow of liquid concentrate in the concentrate conduit (51, 451);
a heater for heating the water in the water tank (25); and
wherein:
the concentrate container (39) comprises a flexible concentrate bag (41); and
the dispenser assembly (103) comprises a manually-operated dispenser assembly comprising a stopper (107) having a normally biased position to inhibit the flow of liquid concentrate and water from the concentrate discharge mixing opening (66, 466) and the water discharge mixing opening (68, 468), and a user-activated position to simultaneously open the concentrate discharge mixing opening (66, 466) and the water discharge mixing opening (68, 468) to permit the discharge of liquid concentrate and water into the mixing chamber (79, 479) to produce the beverage.

9. A method for producing a beverage from a liquid concentrate and water, the method comprising:
attaching a flexible bag (41, 441) containing a supply of the liquid concentrate to a concentrate conduit (51, 451);
sealing the flexible bag (41) in an airtight enclosure (214, 414);
pressurizing a fluid in the airtight enclosure and around the flexible bag (41, 441);
transferring the supply of the liquid concentrate through a concentrate conduit (51, 451) to a concentrate discharge mixing opening (66, 466) which opens directly into the mixing chamber (79, 479) and separately from the water discharge mixing opening (68, 468);
transferring a supply of the water through a water conduit (69, 469) to a water discharge mixing opening (68, 468) which opens directly into a mixing chamber (79, 479); and
selectively opening and closing the concentrate discharge mixing opening (66, 466) and the water discharge mixing opening (68, 468) to permit and inhibit the flow of liquid concentrate and water directly and separately into the mixing chamber (79, 479), which released water and liquid concentrate directly leaves the mixing chamber (79, 479) to produce the beverage.

10. The method of claim 9 wherein the transferring the supply of water comprises transferring the supply of water through a water conduit (69, 469) to the mixing chamber (79, 479) by gravity.

11. The method of claim 9 further comprising heating the water in a water tank (25).

12. The method of claim 9 wherein the selectively permitting and inhibiting comprising simultaneously permitting the transfer of water from the water conduit (69, 469) and liquid concentrate from the concentrate conduit (51, 451) into the mixing chamber (79, 479) to produce the beverage, and simultaneously inhibiting the transfer of water from the water conduit (69, 469) and liquid concentrate from the concentrate conduit (51, 451) into the mixing chamber.

13. A dispenser for discharging a beverage from a liquid concentrate and water, the dispenser assembly comprising:
a conduit housing (49, 449) having a water conduit (69, 469) having a water discharge mixing opening (68, 468) and a concentrate conduit (51, 451) having a concentrate discharge mixing opening (66, 466);
a mixing chamber into which the water discharge mixing opening (68, 468) and the concentrate discharge mixing opening (66, 466) directly and separately opens;
a stopper (107) for opening and closing the concentrate discharge mixing opening (66, 466) and the water discharge mixing opening (68, 468) to permit and inhibit the flow of the liquid concentrate and the water into the mixing chamber (79, 479);
a spring (113) for biasing the stopper (107) to inhibit the flow of the liquid concentrate and the water into the mixing chamber (79, 479); and
a handle (115) for moving the stopper (107) to permit the flow of the liquid concentrate and the water into the mixing chamber (79, 479), which released water and liquid concentrate directly leaves the mixing chamber (79, 479) to produce the beverage.

14. The dispenser of claim 13 wherein the conduit housing comprises the water discharge mixing opening (68, 468) and the concentrate discharge mixing opening opens onto the same planar surface.

15. A method for dispensing a food product, the method comprising:
attaching a flexible bag containing a supply of a food product to a conduit;
sealing the flexible bag in an airtight enclosure;
pressurizing a fluid in the airtight enclosure and around the flexible bag;
transferring the supply of the pressurized food product through the conduit to a dispenser; and
selectively sealably engaging the discharge opening with a stopper having a surface to selectively open and close the discharge opening to permit and inhibit the flow of food product from the dispenser.
